Europäisches Patentamt

European Patent Office

Office européen des brevets

(19)

(11) Publication number: **0 363 785**
**A2**

# (12) EUROPEAN PATENT APPLICATION

(21) Application number: 89118283.4

(22) Date of filing: 03.10.89

(51) Int. Cl.⁵: **G01H 11/08**

(30) Priority: 12.10.88 IT 6791788

(43) Date of publication of application:
**18.04.90 Bulletin 90/16**

(84) Designated Contracting States:
**CH DE ES FR GB IT LI SE**

(71) Applicant: **POLYSENS S.p.A.**
**Via Donatello 24**
**I-50028 Tavarnelle Val di Pesa (Firenze)(IT)**

(72) Inventor: **Fenn, Maurizio**
**Viale Redi 41/C**
**I-50144 Firenze(IT)**

(74) Representative: **Saconney, Piero et al**
**c/o JACOBACCI-CASETTA & PERANI S.p.A.**
**Via Alfieri, 17**
**I-10121 Torino(IT)**

(54) Transducer for the detection of dynamic forces, measuring and/or control equipment and method including such transducer.

(57) A piezoelectric transducer (41) which can be inserted e.g. as a gasket into a structure (38, 42) to monitor dynamic forces without altering the mechanical behavior or functioning of the monitored device. The transducer (41) may take a variety of shapes or forms. It may be used to monitor peak forces, such as those forces associated with machine start-up, or it may be used to monitor cadenced forces, such as those forces associated with the steady-state operation of a machine. Signal processing and control equipment (53) and methods for modifying and utilizing electrical signals generated by the transducer are also disclosed.

FIG.8

EP 0 363 785 A2

## Transducer for the detection of dynamic forces, measuring and/or control equipment and method including such transducer

The present invention relates to a transducer for the detection of dynamic forces between two opposed surfaces of mechanical parts, and to methods and apparatus for measuring and/or controlling such forces using the transducers.

In various fields of technics, one of which is, for example, the sector of machine tools, it is necessary to measure continuous or impulsive forces between two structures or mechanical parts which must be rigidly joined together.

The force which a tool applies during the machining of a piece increases with the increased wear of the tool. Monitoring the force applied to the tool provides useful indications of the tool's efficiency, allowing for its timely replacement. This minimizes the risk of the tool breaking and consequently damaging the machined piece. As the value of the machined pieces increase, this becomes increasingly more important. It is also important to control tool wear of automated machining equipment, and to replace worn tools to maintain quality and productivity.

In many cases, it is not possible to use conventional discrete load cells to make measurements of this kind, because introducing objects of an established size could alter the mechanical behavior of the structure or alter the way it functions. For example, the head of a milling machine, if modified by introducing load cells, could not maintain the mechanical rigidity necessary to carry out the machining operation.

It is, therefore, a primary object of the present invention to provide a transducer which can be inserted into a structure between two opposed surfaces of mechanical parts, without altering the structure, both with regard to the mechanical behaviour and the way of functioning.

According to the present invention, this object is attained by a transducer characterised in that it essentially comprises at least one relatively thin element made at least partially of piezoelectric material, which element can be interposed as a gasket between said opposed surfaces and is adapted to generate, as a result of variations of dynamic force between said opposed surfaces, a voltage difference between two opposite faces each of which corresponds to one of said opposed surfaces, and in that said element is provided with a couple of lead means for electrically connecting said opposed surfaces to an external circuit for the use of an electrical signal corresponding to said voltage difference.

The term dynamic force as used herein is meant to include without limitation near to static dynamic forces that occur, for example, once every one hundred seconds or over a one hundred second cycle (0.01 Hz).

The external circuit utilizes the electrical signal corresponding to the above-mentioned difference in potential.

A transducer made in accordance with this invention can be interposed between two mechanical parts of a structure, for example, as a replacement for a normal gasket, without requiring modifications to the structure.

Preferably, the material of the piezoelectric element is a polymeric material, such as the polyvinylidene fluoride-2 (PVF2), or one of its co-polymers. Piezoelectric polymeric materials are not fragile and, having the shape of a sheet, are flexible and relatively yielding. These characteristics make the materials suitable for use as a gasket between surfaces that are normally even, but which present levelness defects and/or surface roughness. Because the gasket consists of polymeric material, it compensates for these defects, uniformly contracting the two opposed surfaces which surrounds the gasket rather than contracting the surfaces at discrete points.

Because of its flexibility, a piezoelectric polymeric gasket can be interposed between two surfaces which are not even. For example, the gasket can be inserted between a shaft bearing and the cooperating housing. However, it is also possible to give the piezoelectric element a shape that initially is not even, for example, a tile shape.

From an electronic point of view, a piezoelectric element can be compared to a capacitor, across which a charge manifests itself in proportion, with excellent linearity, to the variations of pressure which is exerted on it. A piezoelectric transducer can give a signal only as a result of dynamic forces. This constitutes an advantage, because the piezoelectric gasket may be used as a measuring device which can be preloaded with a predetermined static force. For example, the gasket can be interposed between two mechanical parts which are tightened together, such as the headstock of a machine tool and a toolholder. In this case the two parts can be tightened reciprocally without the piezoelectric transducer losing the sensitivity required to measure dynamic load fluctuations of even a few grams. This would not be possible utilizing extenso-metrical load cells. If an extensometrical load cell is interposed between two parts with a tightening force of 200 kg, it is no longer capable of measuring loads of only a few grams.

However, because piezoelectric transducers can only provide signals as a result of dynamic forces or pressure variations, a particular technique for the utilization of the signals is required.

The invention also relates to equipment which includes the piezoelectric element and the relative external circuit. The equipment may use the peak electrical signals emitted by the piezoelectric element (which correspond to single impulsive forces), or it may use a signal which corresponds to the envelope of timed signals, which in turn correspond to the timed impulsive forces between the two opposed surfaces of the mechanical parts.

Further, the invention relates to methods which make use of the piezoelectric element for determining when dynamic peak forces or cadenced dynamic forces between opposed surfaces of mechanical parts exceed or predetermined threshold value.

The invention will be understood better when reading the following detailed description made with references to the attached drawings, which are given as examples and are not to be construed as limiting.

FIGS. 1 - 4 are perspective views of four types of piezoelectric gaskets in accordance with the present invention.

FIG. 5 is an enlarged cross-sectional view, with altered proportions, representative of apparatus of FIGS. 1 - 4.

FIG. 6 is a view similar to that of FIG. 5, showing an alternative embodiment of this invention.

FIG. 7A and 7B are schematic diagrams of illustrative embodiments of a pre-amplifying circuit of this invention.

FIG. 8 is a perspective view of the gasket of FIG. 3 attached to a drilling head and equipment for the treatment of signals emitted by the gasket.

FIG. 9 is a fragmental axial hemisectional view of the drilling head of FIG. 8.

FIG. 10 is a cross-sectional view of a radial shaft bearing using a piezoelectrical gasket in accordance with the present invention.

FIG. 11 is a graph illustrating the development in time of a characteristic dynamic force of a mechanical process such as milling or drilling.

FIG. 12 is a schematic diagram of apparatus used to detect single impulsive forces, including a piezoelectric transducer in accordance with the present invention.

FIGS. 13 - 15 are simplified schematic diagrams of illustrative embodiments of the apparatus used to detect cadenced dynamic forces including a piezoelectric transducer in accordance with this invention.

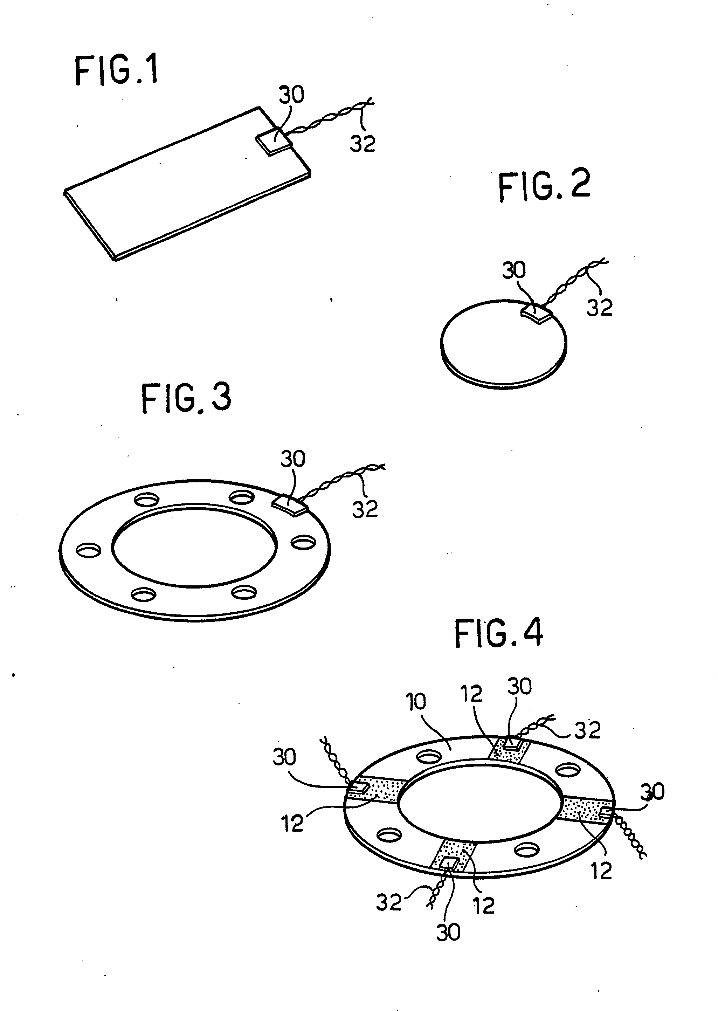

FIGS. 1 - 4 show four transducers constructed in different shapes, each an illustrative embodiment of this invention. Each transducer includes a relatively thin and flexible sheet.

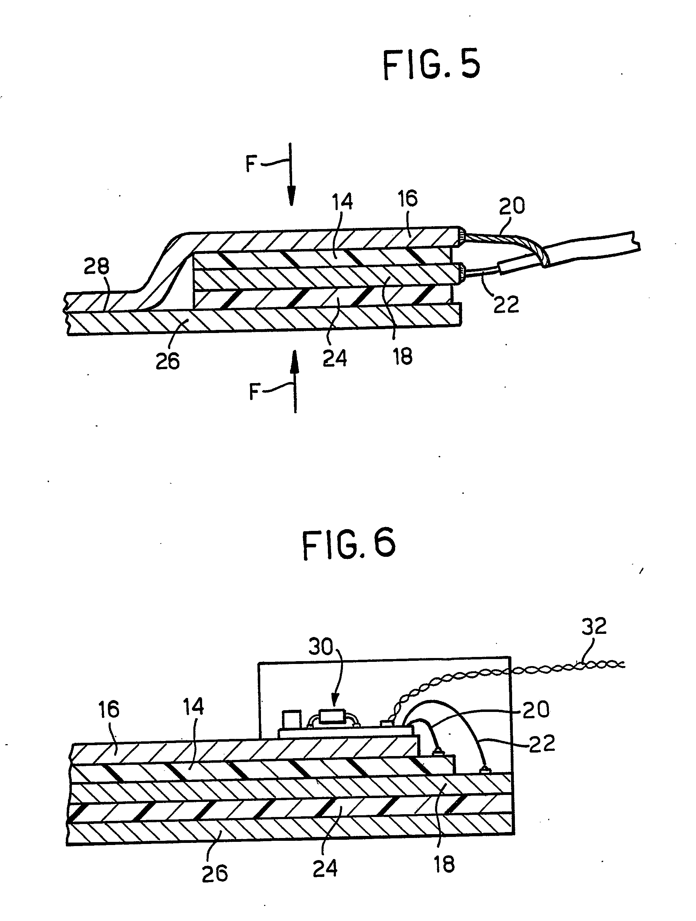

The transducer of FIG. 1 is made in the form of a strip or plate. The transducer of FIG. 2 is made in the form of a circular disc. The transducer of FIG. 3 has the form of a flat, annular gasket. The transducers of FIG. 1, 2 and 3 could have, over the whole or part of their extension, a structure such as that illustrated in FIGS. 5 and 6.

FIG. 4 shows a transducer in the shape of a flat, annular gasket. The transducer of FIG. 4 differs from that of FIG. 3 in that the material of gasket 10, which can be ordinary type, incorporates piezoelectric elements 12 disposed, for example, in four areas in the form of a cross, each of which could have a structure as that of FIG. 5 or FIG. 6. A preferred use of the transducer as that of FIG. 4 will be discussed later.

FIG. 5 illustrates a cross-sectional view of the structure of a transducer which can be formed in a variety of shapes such as, for example, the illustrative embodiments of FIGS. 1, 2 or 3, or can comprise the structure of one of the areas 12 of the transducer of FIG. 4.

The transducer of FIG. 5 includes, as a fundamental element, a thin intermediate layer 14, comprising a piezoelectric material, preferably a polymeric material such as the polyvinylidene fluoride-2 (PVF2) or one of its co-polymers. Layer 14 forms the center layer of a sandwich that is comprised of outer layers 16 and 18 of conducting material. Layers 16 and 18 are applied on the opposed faces of the piezoelectric layer 14. The layers 16 and 18 can be comprised of metallic sheets, for example steel sheets which are glued to piezoelectric layer 14. Alternatively, layers 16 and 18 may be applied by metallization of layer 14. If the metallic sheets are glued, it is not necessary that the glue used be electroconductive, because piezoelectric layer 14 is equivalent to the dielectric of a capacitor, and conductive layers 16 and 18 are equivalent to the capacitor conductors.

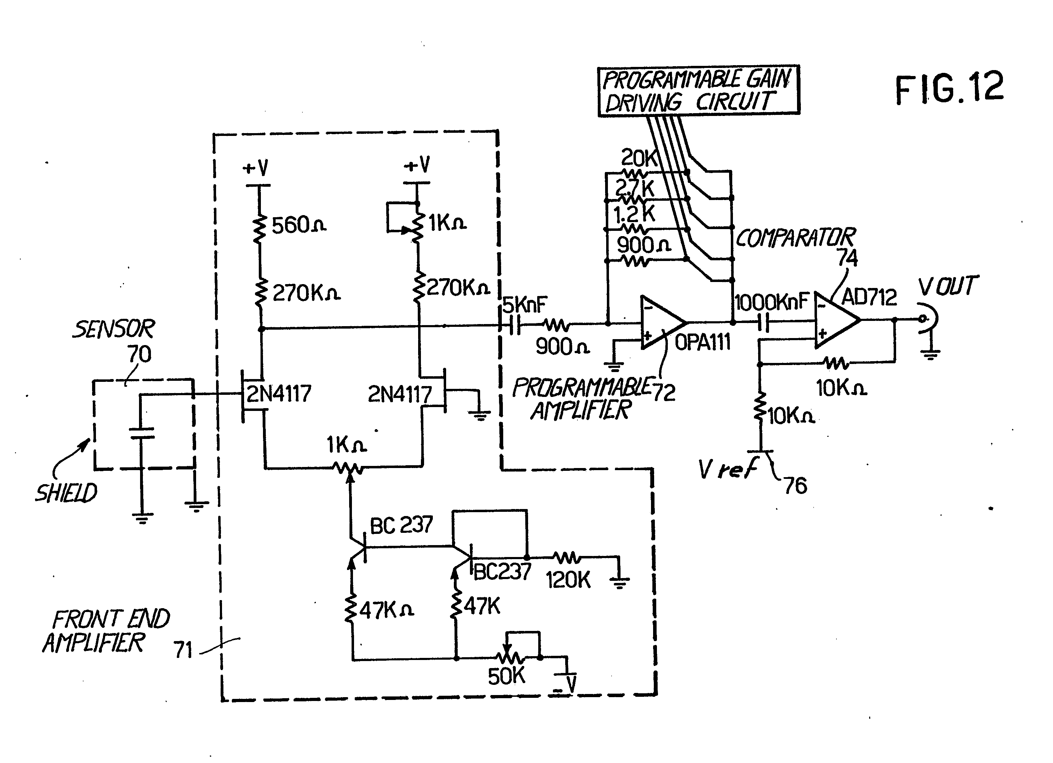

When piezoelectric layer 14 is subjected to a variation of forces or pressures which have a component directed according to arrows F, a difference of electric potential is generated between its two opposed faces. Electrical leads 20 and 22 are connected to each layer of conductive material 16 and 18, respectively, for example by means of soldering. Leads 20 and 22 connect the above-mentioned opposed faces to a circuit which utilizes the electric signal corresponding to the above-mentioned difference of the potential. Examples of such circuit are shown in FIGS. 12 - 15.

For certain applications, a transducer comprising only piezoelectric layer 14 and conducting layers 16 and 18 is sufficient. Nevertheless, the transduction of loads from a piezoelectric device presents, as in the case of capacitors, some circuital problems; one of these is the high impedance of the device, and therefore, its susceptibility to collecting electrical noises. The sensitivity to electrical noises is even more critical in applications for which a transducer in accordance with the invention is particularly intended. For example, transducers used in machine tools are particularly susceptible to electromagnetic noises caused by the high AC currents the machine tools draw and the presence of heavy electrical motors nearby. It is, therefore, preferable to shield the transducer, as shown in FIG. 5, to avoid electrical noises which make the obtained signal unusable.

Referring to FIG. 5, shielding is accomplished by means of an isolating layer 24 and an external layer of conductive material 26. Layer 24 is disposed between layers 18 and 26. Isolating layer 24 may be any dielectric polymeric film material, including mylar, kapton, PVC, teflon, and non-piezoelectric PVF. Layer 24 is preferably selected to meet the needs of a particular application.

The layers shown in FIG. 5 can have an overall thickness of approximately 0.3 mm. External layer 26 is of the same nature and material as external layer 16. For the purpose of shielding, external layers 16 and 26 are electrically interconnected. If layers 16 and 26 comprise metallic sheets, they are preferably connected by means of reciprocal soldering 28. External metallic layers 16 and 26, when used in a machine tool, for example, are intended to be enclosed between two opposed metallic surfaces, and thereby grounded. In this case the signal will be taken from the internal coating comprised of the layer of intermediate conducting material 18, which, from an electrical point of view, is efficaciously shielded.

FIG. 6 shows an illustrative embodiment of the invention in which the transducer itself is provided with an impedance matching circuit, which can also perform signal preprocessing. Impedance matching of the transducer, i.e. lowering the transducer's impedance, is another method of minimizing susceptibility to electrical noise in the environment. It is advantageous that the impedance match takes place as near as possible to the signal source.

Those parts of FIG. 6 which correspond to that of FIG. 5 are indicated with the same numerical references. A microcircuit 30, having the form of a layer, is applied to the exterior of layer 16 (see FIG. 1 - 4, also). Microcircuit 30 causes the impedance match. Electrical leads 20 and 22 connect layers 14 and 18 to the input of circuit 30. The input impedance, in gigaohms, is lowered by microcircuit 30 to an impedance of approximately a few ohms. In this way, the signal sent to the utilization circuitry, through the output conductors 32, is considerably less sensitive to any induced electromagnetic noises. Conductors 32 also symbolize the necessity of the current feed of microcircuit 30. In an alternative embodiment, microcircuit 30 may be used with a transducer having only three layers. In this embodiment, microcircuit 30 is disposed adjacent to conductive layer 16, and is connected by electrical leads 20 and 22 to piezoelectric layer 14 and a second conductive layer 18.

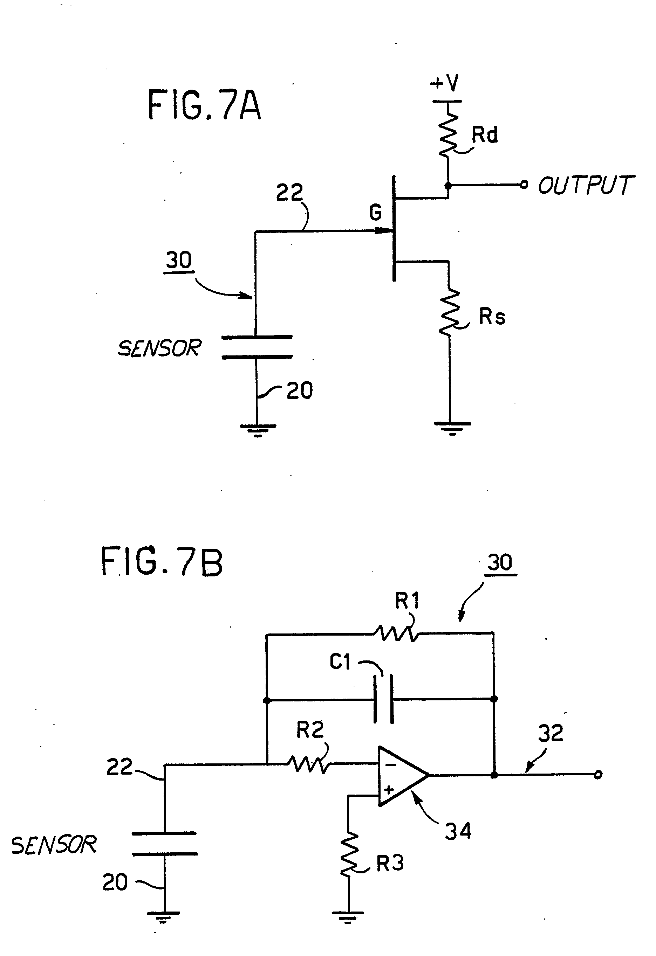

In one embodiment, referring also to FIG. 7A, microcircuit 30 cab comprise a field effect transistor ("FET"), which permits contemporaneous preamplification (preprocessing) of the signal produced by the transducer, and impedance matching of the signal itself. Layer 18 of the transducer is preferably electrically connected to the gate terminal of the FET by electrical lead 22. Layer 14 of the transducer may be connected to ground by lead 20. The drain terminal of the FET provides the output electrical signal and is preferably connected to a voltage supply V through resistor Rd. The source terminal of the FET is preferably grounded through a second resistor Rs. The values of resistors Rd and Rs may be selected to obtain the magnitude of the amplification desired. If only impedance matching is desired (i.e. no amplification), the source terminal of the FET is grounded without a resistor.

An alternative embodiment of microcircuit 30, shown in FIG. 7B, is used for monitoring nearstatic dynamic forces which occur, for example, at frequencies in the vicinity of approximately 0.01 Hz. In this embodiment of microcircuit 30, electrical lead 22 preferably connects the transducer to the negative input terminal of an operational amplifier 34 through a resistor R2. The positive input terminal of operational amplifier 34 preferably is grounded through a resistor R3. A feedback loop is formed between the output terminal and the negative input terminal of operational amplifier 34. The feedback loop includes a resistor R1 connected in parallel with a capacitor C1. The values of resistors R1, R2 and R3, and capacitors C1 depend upon the circuit application, but the preferred values of resistors R1, R2 and R3 are $10^{11}$ ohms, 47 ohms and $10^{11}$ ohms, respectively.

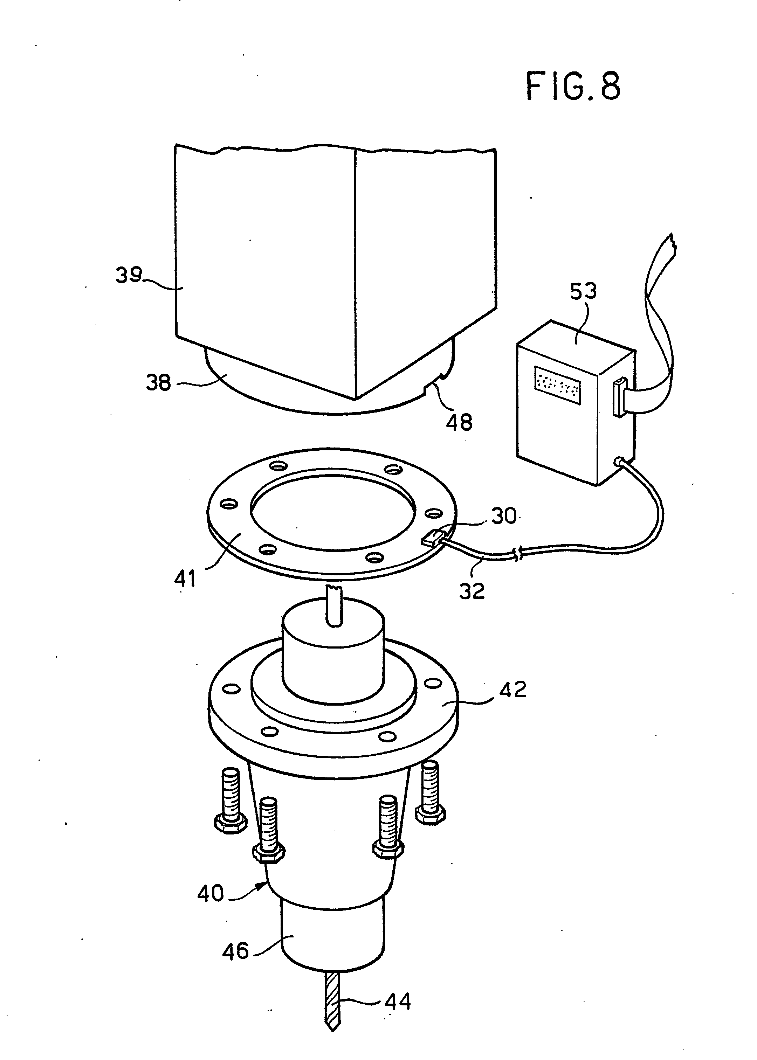

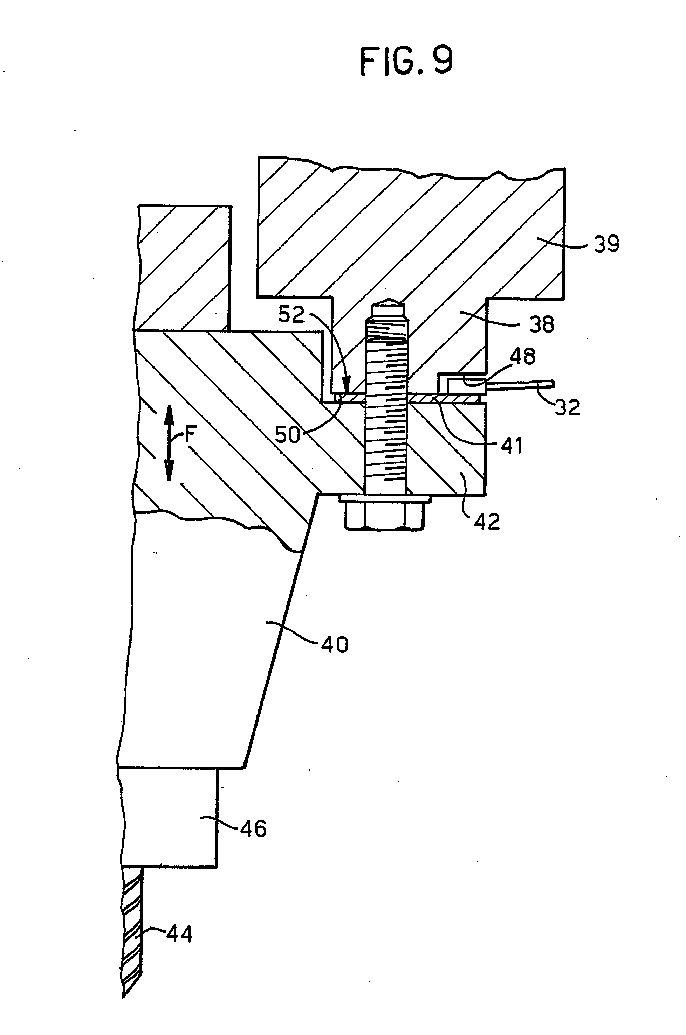

FIGS. 8 and 9 illustrate an application of a piezoelectric gasket 41 in accordance with the invention (see FIG. 3). A milling or drilling head 39 with the vertical shaft is provided at the lower part with a fastening flange 30. A mandrel holder 40, provided with a bolting flange 42, is jcined with flange 38 at head 39. A butt mill 44 with one drilling bit, is mounted into the mandrel or pliers 46 of the mandrel holder 40.

The normal annular gasket which is interposed between flanges 38 and 42 is replaced, according to the invention, by piezoelectric gasket 41. If gasket 41 is provided with microcircuit 30, only a slight, and completely harmless, modification of the machine may be necessary. A small notch 48 is made in flange 38 to provide a space for microcircuit 30 of gasket 41. Gasket 41 of FIGS. 8 and 9 is sensitive to axial dynamic forces (Arrows F, FIG. 9) which appear between the opposed surfaces 50 and 52 of flanges 38 and 42.

In an alternative embodiment, gasket 41 of a milling or drilling machine, such as that of FIGS 8 and 9, is a gasket like that of FIG. 4. In this case, piezoelectric areas 12 serve not only for the detection of axial dynamic forces, but also for the detection of lateral dynamic forces and the respective orientation.

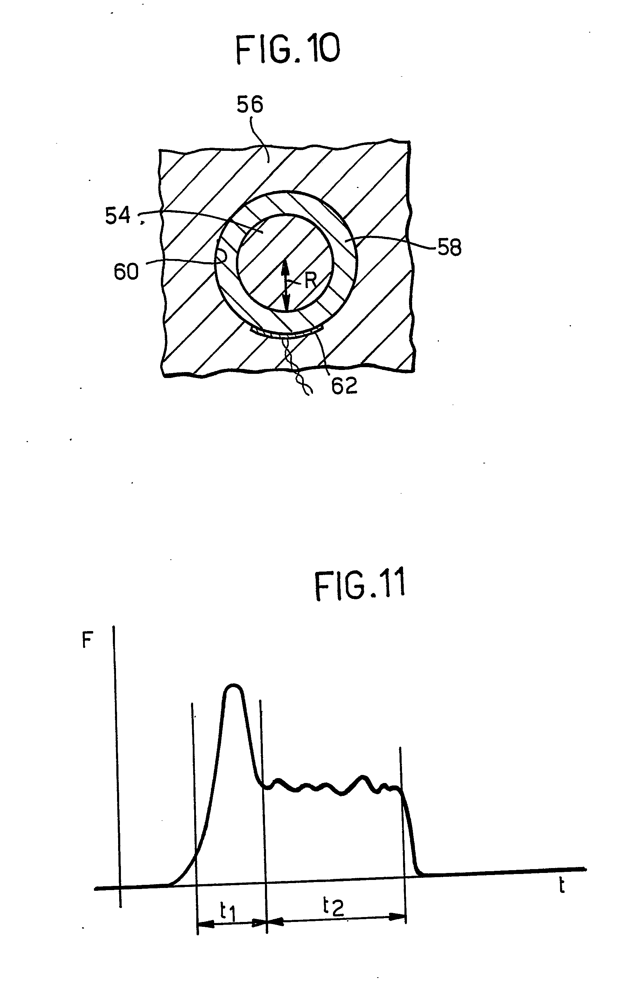

FIG. 10 illustrates the application of a piezoelectric transducer for the detection of dynamic radial forces "R" to which, for example, a rotating shaft 54 of a machine tool is exposed. A standing structure 56 is shown with shaft 54 passing through it. A bushing 58 is put between shaft 54 and structure 56; this bushing is inserted into a cylindrical housing 60 of structure 56.

Transducer 62 is disposed between bushing 58 and housing 50, according to the invention. Transducer 62 can comprise a plate or stripe such as that of FIGS. 1 and 2 which, because of its flexibility, has assumed an arched form of tile-like form. Transducer 62 is then positioned to detect radial dynamic forces according to the double arrow R.

FIG. 11 illustrates a typical development of the dynamic force F, dependent upon time t, during drilling or milling. In a first time interval $t_1$, an initial peak force occurs corresponding to the initial operation of the tool. During the subsequent time interval $t_2$, force F is relatively constant, corresponding to the power stroke. Transducers developed in accordance with this invention are suited to detect the peak force exerted during interval $t_1$, and the relatively constant force exerted during interval $t_2$.

FIG.12 illustrates apparatus for detecting the peak force or, more generally, for detecting the impulsive forces acting on the transducer. The equipment comprises shielded piezoelectric transducer 70, front-end amplifier 71, and a programmable gain amplifier 71, and a programmable gain amplifier 72, which is connected to an input of a threshold comparator 74. The threshold input of comparator 74 is indicated with 76. The gains selecting capability of amplifier 72 permits more scales for "reading" the signals.

The electrical peak signals, emitted by piezoelectric transducer 70 and amplified by amplifier 72, are compared by comparator 74 with a predetermined threshold 76, so as to emit, at output 78 of amplifier 74, a measure and/or control signal. This last signal can be used to supply an alarm indication for deactivating a machine tool, or for any other purpose.

The circuit of FIG. 12 is especially useful in the case of a machine tool, such as a lathe, in which just one cutting edge processes a piece continuously. In this case, the peak force, which occurs when the tool starts processing the piece at the beginning of a cut, provides an indication of significant wear of the tool.

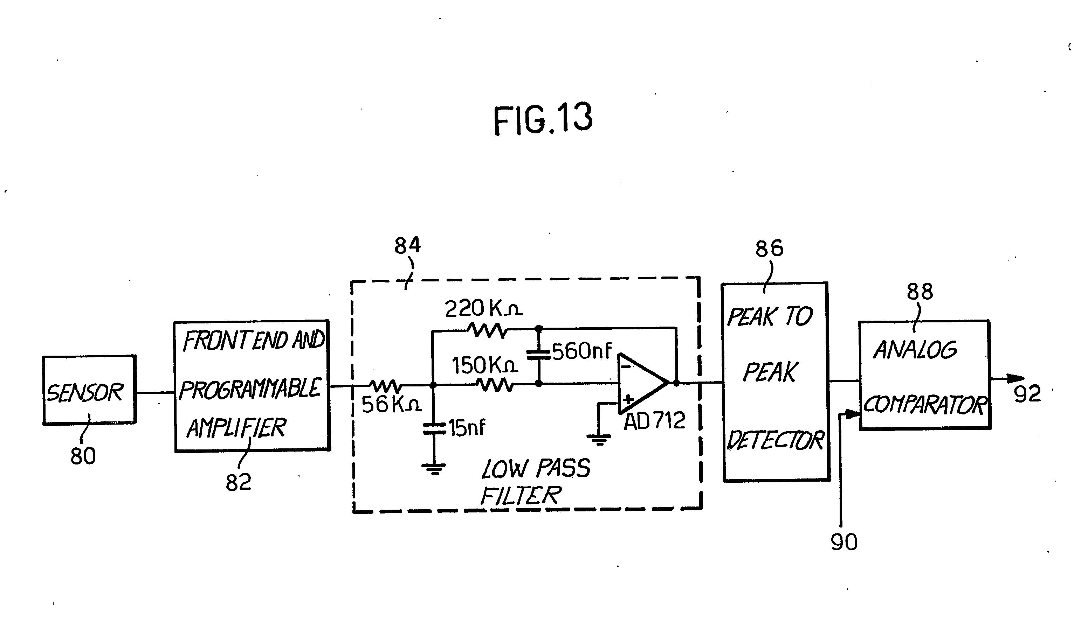

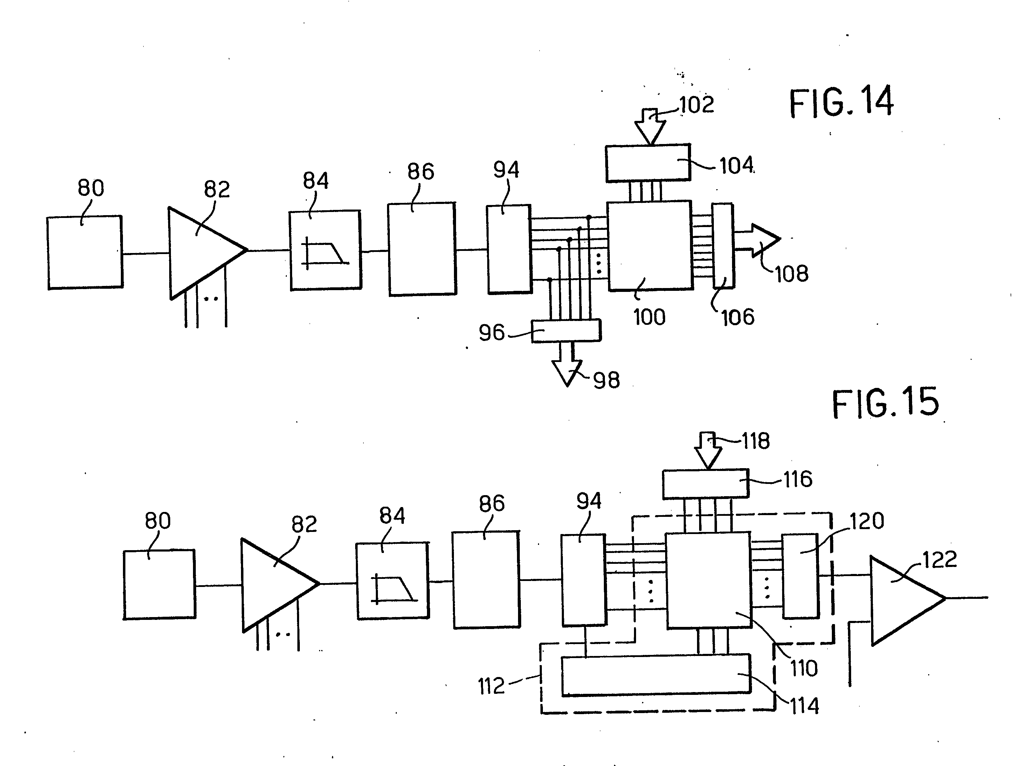

FIG. 13 illustrates apparatus which utilizes the signal present during the period $t_2$ of FIG. 11. This signal is typical for a machine tool with various cutting edges, such as a drill bit or milling cutter. During the processing of the piece, force peaks occur in periodic rhythm corresponding to the working rhythm of the tool teeth with the piece. The apparatus of FIG. 13 (and of FIGS. 14 and 15) utilizes precise detection of the cadenced impulsive forces to obtain a useful signal during the tool work.

In the circuit of FIG. 13, the output of piezoelectric transducer 80 is fed to the input of its selecting gain amplifier 82 (which is similar to amplifier 72 of FIG. 12). Amplifier 82 is followed by a low-pass filter 84 which eliminates the peak signal of initial period $t_1$ of FIG. 11. This peak signal corresponds to the beginning of the operation of the tool on the work piece. The peak signal is undesirable because it would inopportunely cause the threshold circuit to trip. In an alternative embodiment, the low-pass filter can be by-passed to detect collisions between the tool and the work piece, and to detect tool breakage. When the circuit is used for this purpose, the circuit's response time is an important parameter. A quick response is required to avoid damage to the tool and to the work piece.

Low-pass filter 84 is followed by an envelope detector 86 (so-called "peak to peak" detector). Envelope detector 86 receives from transducer 80 only the cadenced dynamic force signals from transducer 80 which are emitted during the time interval $t_2$ (see FIG. 11), dependent on their amplification by amplifier 82. From these signals, detector 86 generates an envelope signal which corresponds to the envelope of cadenced signals. Envelope detector 86 also has the function of regenerating the signal from the noise produced by mechanical vibrations of the structure of the machine tool. The filtered envelope signal is then submitted to a decision procedure, and to this end, it is applied to the input of an analog threshold comparator 88. The threshold input of comparator 88 is indicated by the numeral 90. A measuring and/or control signal appears at the output 92 of comparator 88 if the predetermined analog threshold 90 is exceeded by the envelope signal. The signal at output 92 is then utilized for purposes similar to those described for the circuit of FIG. 12.

FIG. 14 illustrates a variation of the circuit of FIG. 13. Elements 80, 82, 84 and 86 of FIG. 14 are equivalent to those indicated with the same references in FIG. 13. After envelope detector 86, there is an analog-to-digital converter 94. Converter 94 transfers the digital data by means of a buffer 96, directly towards a data-handling system, e.g., storage devices, as symbolized by arrow 98. Preferably, decision logic circuitry is also connected to converter 94. A digital threshold comparator 100, which has the same function as comparator 88 of FIG. 13, performs this function. Arrow 102 symbolizes a threshsold input which is connected to comparator 100 by means of buffer 104. Buffer circuit 106 is at the output of comparator 100, through which the envelope signal (now digitized), is transmitted, as per output 108. Output 108 is a measure and/or control signal to be used for purposes similar to those described for the circuit of FIG. 12.

FIG. 15 illustrates a variation of the circuit of FIG. 14. Equal and equivalent elements are again indicated with 80, 82, 84, 86 and 94. Piezoelectric transducers, such as transducer 80, are often subject to a phenomenon of continuous drift of the signal. It is, therefore, desirable to compensate for this phenomenon to preserve the information on the continuous force component during the work (interval $t_2$ of FIG. 11).

Microprocessor 110 compensates for the signal drift. The microprocessor is part of a sequence of signal treatments and is indicated in the section marked 112. This sequence comprises, apart from the microprocessor 110, a logical circuit 114 and a digital-to-analog converter 120. Circuit 112 reads the slope or drift of the zero-relative signal of the system in inoperative position, as digitized by converter 94, during the periods of inactivity of the system and at predetermined time intervals controlled by the microprocessor 110. The slope of this signal, once recognized through an interpolation process, is converted into a compensation signal of the drift. While the system is operating, the compensation signal is continuously taken to the digitized data arriving from transducer 80, such that the drift effect is compensated. Information about the functioning and off-position status of the system are impressed upon microprocessor 110 by signal 118 by means of a buffer circuit 116.

The above-mentioned compensation is performed at rather approached time intervals because the drift slope is dependent upon non-controllable parameters, such as temperature, which are subject to unforeseen variations, and consequently requires continuous monitoring, Logic circuit 114 examines the slope value and updates the compensation values at predetermined time intervals during the system's inactivity.

In this embodiment of the invention, the digital signal emitted by microprocessor 110 is re-transformed into an analog signal by converter 120 and then fed, as in the circuit of FIG. 13, to threshold comparator 122. The output signal of comparator 122 is used for the same purposes as indicated above for the circuits of FIGS. 12, 13, and 14.

It will be understood that the forgoing is merely illustrative of the principles of the invention, and that various modifications can be made by those skilled in the art without departing from the scope and spirit of the invention.

## Claims

1. A transducer for the detection of dynamic forces between two opposed surfaces (50, 52) of mechanical parts (36, 40), characterised in that it essentially comprises at least one relatively thin element (34) made at least partially of piezoelectric material, which element (34) can be interposed as a gasket between said opposed surfaces (50, 52) and is adapted to generate, as a result of variations of dynamic force between said opposed surfaces (50, 52), a voltage difference between two opposite faces each of which corresponds to one of said opposed surfaces (50, 52), and in that said element (34) is provided with a couple of lead means (20, 22) for electrically connecting said opposed surfaces (50, 52) to an external circuit for the use of an electrical signal corresponding to said voltage difference.

2. A transducer according to claim 1, characterised in that the piezoelectric material is a polymeric material.

3. A transducer according to claim 2, characterised in that the polymeric material is polyvinglidene fluoride-2 (PVF2) or a co-polymer thereof.

4. A transducer according to any of claims 1 to 3, characterised in that the piezoelectric element is an intermediate layer (14) of a sandwich which includes a couple of layers (16, 18) of conductive material applied on opposite faces of the intermediate layer (14).

5. A transducer according to any of claims 1 to 3, characterised in that the piezoelectric element is part of a sandwich which includes, in succession, a first, outer, layer (16) of conductive material, the said piezoelectric element (14), a second, intermediate, layer (18) of conductive material, an insulating layer (24) and third, outer, layer (26) of conductive material, and in that the two outer layers (16, 26) are electrically connected to each other for screening purposes as well as connected to one (20) of the lead means of the couple, said second layer (18) being connected to the other lead means (22) of the couple.

6. A transducer according to any of the preceding claims, characterised in that the gasket includes a microcircuit (30) having the form of a layer for signal preprocessing and/or impedance matching purposes, said microcircuit being connected on the one hand to said lead means (20, 22) and, on the other hand, to a conductor (32) for the connection to said external circuit as well as for the energization of the microcircuit (30).

7. A transducer according to any of claims 2 to 6, characterised in that the gasket is in the form of a relatively flexible thin lamina.

8. An apparatus for detecting individual impulsive forces between two opposed surfaces (50, 51) of mechanical parts (36, 40) for measuring and/or control purposes, characterised in that it includes at least one transducer (70) according to any of claims 1 to 7, and a corresponding external measuring and/or control circuit which is fed by peak signals generated by the transducer (70), said peak signals corresponding to the individual impulsive forces.

9. An apparatus according to claim 8, characterised in that it further includes a threshold comparator (74) interposed between the transducer (70) and the corresponding external circuit to feed a measure and/or control signal to the external circuit when the peak signals exceeds a predetermined threshold.

10. An apparatus for detecting cadenced impulsive forces between two opposed surfaces (50, 52) of mechanical parts (36, 40) for measuring and/or control purposes, characterised in that it includes at least one transducer (70) according to any of claims 1 to 7, an envelope detector (86) which is fed with cadenced signals generated by the transducer (80) and generates an envelope signal corresponding to the envelope of the cadenced signals, and a corresponding external measuring and/or control circuit to which the envelope signal is fed.

11. An apparatus according to claim 10, characterised in that it further includes a lowpass filter (84) interposed between the transducer (80) and the envelope detector (86) to eliminate from the periodic signal the signal peaks due to individual transitional impulsive forces and possible vibratory noise.

12. An apparatus according to claim 11, characterised in that it further includes a threshold comparator (88; 100; 122) interposed between the envelope detector (86) and the corresponding external circuit to feed a measuring and/or control signal to the latter circuit when the envelope signal exceeds a predetermined threshold.

13. An apparatus according to any of claims 10 to 12, characterised in that it includes means (112) to detect and compensate a drift of the envelope signal.

14. An apparatus according to claim 13, characterised in that the drift detection and compensation means include sampling means (114) which, during periods of absence of the impulsive forces, pick up at intervals a background signal and, from this signal, through an interpolation process, elaborate a drift compensation signal which is substracted from the envelope signal during periods of presence of the impulsive forces.

15. A method for determining when dynamic peak forces between two opposed surfaces (50, 51) of mechanical parts (36, 40) exceed a predetermined threshold by the use of a transducer, characterised by the steps of:
- interposing a transducer according to any of claims 1 to 7 between and in contact with said opposed surfaces (50, 51);
- amplifying the electrical signal generated by said transducer;
- comparing said amplified electrical signal to a preselected threshold reference signal; and
- generating an output signal corresponding to dynamic peak forces when said electrical signal exceeds said threshold reference signal.

16. A method for determining when cadenced dynamic forces between two opposed surfaces (50, 51) of mechanical parts (36, 40) exceed a predetermined threshold, characterised by the steps of:
- interposing a transducer according to any of claims 1 to 7 between and in contact with said opposed surfaces (50, 51) so that the transducer is capable of generating cadenced electrical signals in response to said cadenced dynamic forces;
- amplifying the electrical signals generated by said transducer;
- lowpass filtering the amplified electrical signals;
- generating an envelope signal corresponding to said cadenced electrical signals after the latter are lowpass filtered;
- comparing said envelope signal to a preselected threshold reference signal; and
generating an output signal when said envelope signal exceeds said preselected threshold reference signal.

17. A method according to claim 22, characterised in that the steps of comparing said envelope signal and generating an output signal further comprise:
converting said envelope signal into a digital signal;
applying a zero-relative compensation signal to said digital signal to compensate for signal drift;
converting the compensated digital signal into a compensated analog signal;
comparing said compensated analog signal with a preselected threshold reference signal; and
generating an output signal when said compensated analog signal exceeds said threshold reference signal.

FIG.1

30

32

FIG.2

30

32

FIG.3

30

32

FIG.4

10  12  30

32

30

30

12

12

32

12

30

12

# FIG. 5

F

28  26  24  18  14  16  20  22

# FIG. 6

30  32

16  14  20  22

26  24  18

EP 0 363 785 A2

FIG.7A

+V

Rd

22

G

30

OUTPUT

Rs

SENSOR

20

FIG.7B

30

R1

C1

R2

22

34

SENSOR

20

32

R3

# FIG.8

# FIG. 9

# FIG.10

# FIG.11

FIG.12

PROGRAMMABLE GAIN DRIVING CIRCUIT

SENSOR 70

SHIELD

FRONT END AMPLIFIER 71

2N4117

2N4117

560Ω

270KΩ

1KΩ

270KΩ

1KΩ

BC 237

BC237

47KΩ

47K

120K

50K

5KnF

900Ω

OPA111

PROGRAMMABLE AMPLIFIER 72

20K

2.7K

1.2K

900Ω

COMPARATOR 74

1000KnF

AD712

VOUT

10KΩ

10KΩ

Vref 76

EP 0 363 785 A2

# FIG.13

SENSOR 80

FRONT END AND PROGRAMMABLE AMPLIFIER 82

84

220 KΩ

150 KΩ

560nf

56 KΩ

15nf

AD 712

LOW PASS FILTER

PEAK TO PEAK DETECTOR 86

ANALOG COMPARATOR 88

90

92

EP 0 363 785 A2

FIG.14

FIG.15

EP 0 363 785 A2